# EUROPÄISCHE PATENTSCHRIFT

(11) **EP 2 727 797 B1**
(45) Veröffentlichungstag und Bekanntmachung des Hinweises auf die Patenterteilung: **30.03.2016**
(21) Anmeldenummer: 13190973.1
(22) Anmeldetag: 30.10.2013
(51) Int. Cl.: B62D 5/065, F15B 7/00

(54) **Hydrostatische Stellschaltung sowie deren Verwendung**
Hydrostatic positioning switches and their use
Circuit de réglage hydrostatique et son utilisation

(30) Priorität: 30.10.2012 DE 102012021207
(43) Veröffentlichungstag der Anmeldung: 07.05.2014
(73) Patentinhaber: Weber-Hydraulik GmbH, 74363 Güglingen (DE)
(72) Erfinder: Käsler, Richard, 53424 Remagen (DE); Zatrieb, Jacek, 74363 Güglingen (DE)
(74) Vertreter: Säger, Manfred

(56) Entgegenhaltungen:
- EP-A1- 1 251 059
- DE-U1-202005 021 167
- US-A1- 2002 060 104
- US-A1- 2009 120 085
- US-A1- 2011 282 551

## Beschreibung

### Technisches Gebiet

Die vorliegende Erfindung betrifft eine hydrostatische Stellschaltung gemäß dem Oberbegriff des Anspruchs 1 *(vgl.* US 2011/0282551 A1 oder US 2009/0120085 A1*).*

### Stand der Technik

Derartige Stellschaltungen sind zum Beispiel in der DE 20 2005 021 167 U1 offenbart und in einer Vielzahl von Ausführungsformen bekannt, etwa als Hilfslenkung der Hinterachse von Nutzfahrzeugen.

Das Lenken erfolgt hierbei über einen doppeltwirkenden hydraulischen Aktuator, zum Beispiel Lenkzylinder, über jeweils eine Verbindungsleitung, wobei bei und/oder nach der einen bestimmten Ansteuerung der Hydraulikpumpe, zum Beispiel durch Einschlagrichtung und/oder durch Einschlagwinkel der Lenkung, eine bestimmte Menge an Hydraulikflüssigkeit von dem einen als Druckanschluss wirkenden Anschluss der beiden Anschlüsse der Hydraulikpumpe über die eine Verbindungsleitung an die angeschlossene eine Kammer unter Verschiebung des Stellelements, insbesondere des Kolbens, des hydraulischen Aktuators geleitet und hierbei Hydraulikflüssigkeit aus der anderen Kammer in die andere Verbindungsleitung *zum Tank* verdrängt.

Beim Lenkeinschlag in die andere Richtung fließt die Hydraulikflüssigkeit in die andere Richtung zu der anderen Kammer, wodurch ein entgegengesetzter Lenkeinschlag bewirkt wird.

Diese gattungsgemäße hydrostatische Stellschaltung weist den Vorteil auf, dass die von der lenkenden Person beim Lenken aufzubringende Kraft extrem verkleinert ist; außerdem werden keine mechanischen Verbindungen wie Gestänge, Wellen oder Umlenkgetriebe benötigt.

Ein Nachteil bei der gattungsgemäßen Stellschaltung wird ersichtlich, wenn es darum geht, *die Stellung des hydraulischen Aktuators der Stellung des Sollwertgebers anzupassen.*

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine hydrostatische Stellschaltung gemäß dem Oberbegriff des Anspruchs 1 so weiterzubilden, dass die relative Lage des Stellelements des hydraulischen Aktuators zum Gehäuse des hydraulischen Aktuators und/oder die Betriebsparameter des die Hydraulikpumpe antreibenden Antriebsmotors ermittelt werden können.

Diese Aufgabe wird bei einer hydrostatischen Stellschaltung gemäß dem Oberbegriff des Anspruchs 1 erfindungsgemäß durch dessen kennzeichnende Merkmale gelöst, also durch
- eine, insbesondere als Positionssensor ausgebildete, Lageerfassungseinrichtung zum Erfassen der relativen Lage oder relativen Position des Stellelements zum Gehäuse und
- mindestens ein Erfassungsmittel zum Erfassen von Betriebsparametern des Antriebsmotors, insbesondere
   -- eine Drehrichtungserfassungseinrichtung zum Erfassen der Drehrichtung des Antriebsmotors,
   -- eine Drehzahlerfassungseinrichtung zum Erfassen der Drehzahl des Antriebsmotors und
   -- eine Drehmomenterfassungseinrichtung zum Erfassen des Drehmoments des Antriebsmotors.

Bei der erfindungsgemäßen Stellschaltung können also
- sowohl die relative Lage oder relative Position zwischen dem Gehäuse des hydraulischen Aktuators, insbesondere des Hydraulikzylinders, und dem Stellelement des hydraulischen Aktuators, insbesondere des Hydraulikzylinders,
- als auch die Betriebsparameter, insbesondere die Drehrichtung, die Drehzahl und das Drehmoment, des die Hydraulikpumpe antreibenden Antriebsmotors ermittelt werden.

Gemäß der vorliegenden Erfindung *ist* eine, insbesondere als E[lectronic]C[ontrol]U[nit] oder als elektronische Regeleinheit ausgebildete, Regeleinrichtung vorgesehen,
- an die
   -- über die Lageerfassungseinrichtung die relative Lage des Stellelements zum Gehäuse und
   -- über die Erfassungsmittel die Betriebsparameter des Antriebsmotors gemeldet werden und
- von der die Betriebsvorgaben für den Antriebsmotor an eine, insbesondere als E[ngine]C[ontrol]U[nit] oder als Motorsteuereinheit ausgebildete, Ansteuerungseinrichtung des Antriebsmotors übermittelt werden.

Die Lageerfassungseinrichtung, die Drehrichtungserfassungseinrichtung, die Drehzahlerfassungseinrichtung und die Regeleinrichtung können über C[ontroller]A[rea]N[etwork] miteinander verbunden sein, zum Beispiel, um die erfassten Daten in digitalisierter Form zu übermitteln. Es ist jedoch auch denkbar, die Lageerfassungseinrichtung, die Drehrichtungserfassungseinrichtung, die Drehzahlerfassungseinrichtung und die Regeleinrichtung auch alternativ zu C[ontroller]A[rea]N[etwork] oder ergänzend zu C[ontroller]A[rea]N[etwork] zu verbinden und/oder über diese Verbindungen weitere Signale zu übermitteln.

In einer vorteilhaften Weiterbildung der vorliegenden Erfindung kann der Regeleinrichtung ein Sollwertgeber zugeordnet sein, mittels dessen an die Regeleinrichtung die gewünschte relative Lage des Stellelements zum Gehäuse gemeldet wird. Dies erhöht die Flexibilität im Einsatz der vorliegenden hydrostatischen Stellschaltung, zum Beispiel wenn der Sollwertgeber bezüglich des Einschlagwinkels der Lenkung (steering wheel angle input) ausgelegt ist.

Gemäß einer zweckmäßigen Ausgestaltungsform der vorliegenden Erfindung können die Lageerfassungseinrichtung, die Erfassungsmittel, die Regeleinrichtung, der Sollwertgeber und die Ansteuerungseinrichtung in einen Regelkreis eingebunden sein, bei dem die Differenz zwischen dem vom Sollwertgeber geforderten Sollwert der relativen Lage des Stellelements zum Gehäuse und der von der Lageerfassungseinrichtung gemeldeten relativen Lage des Stellelements zum Gehäuse durch entsprechende Ansteuerung des Antriebsmotors selbstständig ausgeregelt wird. Hierdurch können Differenzen zwischen Sollwert und Istwert automatisch sowie ohne Verzögerung kompensiert werden.

Der Fachmann auf dem Gebiet der hydrostatischen Stellschaltungen wird bei der vorliegenden Erfindung insbesondere zu schätzen wissen, dass durch Vergleichen der Veränderung der von der Lageerfassungseinrichtung erfassten relativen Lage des Stellelements zum Gehäuse und des integrierten Signals der Drehzahlerfassungseinrichtung sowie der Drehmomenterfassungseinrichtung die Plausibilität der ermittelten Signale überprüft und/oder Funktionsfehlzustände ermittelt werden können.

In bevorzugter Weise können die Drehrichtungserfassungseinrichtung und die Drehzahlerfassungseinrichtung zu einer konstruktiven Einheit zusammengefasst sein.

Mittels der Drehmomenterfassungseinrichtung kann vorteilhafterweise der für den Antriebsmotor bestimmte Versorgungsstrom, insbesondere Akkumulatorstrom oder Batteriestrom, gemessen werden. Hierzu kann die Drehmomenterfassungseinrichtung sachdienlicherweise zwischen den Antriebsmotor und die Versorgung, insbesondere den Akkumulator oder die Batterie, geschaltet sein.

Der hydraulische Aktuator kann in zweckmäßiger Weise als Gleichlaufzylinder ausgebildet sein, bei dem im Regelbetrieb die jeweils in den Kammern verdrängte Menge an Hydraulikflüssigkeit gleich groß ist.

Gemäß einer bevorzugten Ausführungsform der vorliegenden Erfindung kann der hydraulische Aktuator
- mit einem in der einen Verbindungsleitung vorgesehenen Rückschlagventil,
- mit einem in der anderen Verbindungsleitung vorgesehenen Rückschlagventil,
- mit der einen Feder,
- mit der anderen Feder,
- mit dem Magnetventil,
- mit einem in einer weiteren Verbindungsleitung vorgesehenen, zum Tank hin öffnenden Ventil und/oder
- mit einem in einer anderen weiteren Verbindungsleitung vorgesehenen, zum Tank hin öffnenden anderen Ventil
zu einer konstruktiven Einheit zusammengefasst sein.

Die vorliegenden Erfindung betrifft schließlich die Verwendung mindestens einer Stellschaltung gemäß der vorstehend dargelegten Art als Hilfslenkung für Nutzfahrzeuge.

### Kurze Beschreibung der Zeichnungen

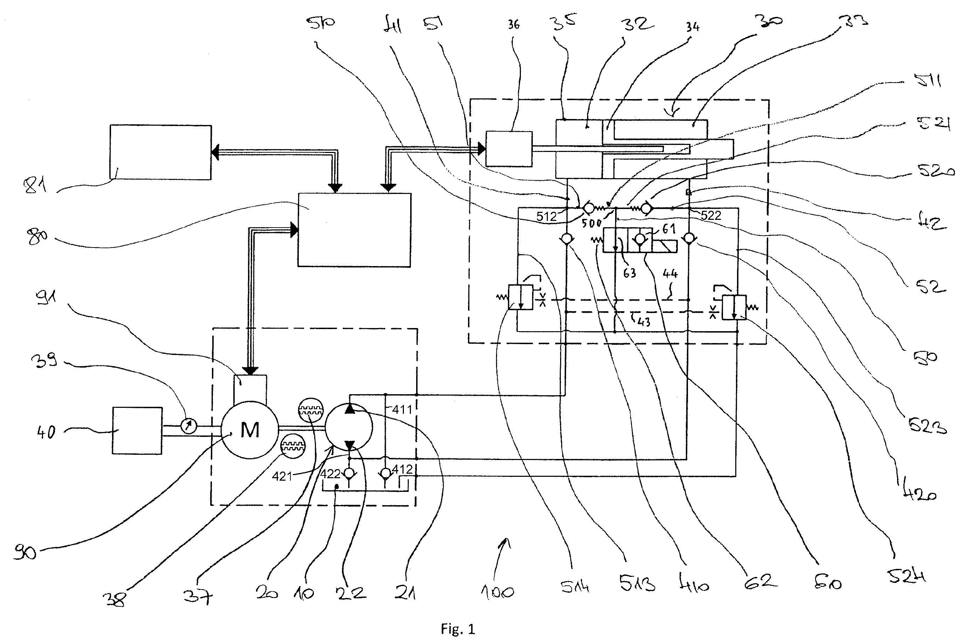

Wie bereits vorstehend erörtert, gibt es verschiedene Möglichkeiten, die Lehre der vorliegenden Erfindung in vorteilhafter Weise auszugestalten und weiterzubilden. Hierzu werden weitere Ausgestaltungen, Merkmale und Vorteile der vorliegenden Erfindung nachstehend anhand des durch Fig. 1 veranschaulichten Ausführungsbeispiels näher erläutert.

Es zeigt:
- Fig. 1: in schematischer Ansicht ein Ausführungsbeispiel der Stellschaltung gemäß der vorliegenden Erfindung.

### Bester Weg zur Ausführung der vorliegenden Erfindung

Die vereinfachte hydrostatische Stellschaltung nach Fig. 1 weist einen Hydraulikflüssigkeit aufweisenden Tank 10 und mit einer gesteuerten, zwei Anschlüsse 21, 22 aufweisenden reversierbaren Hydraulikpumpe 20 mit einem Motor 90 auf, von denen jeder Anschluss 21, 22 zu einer der beiden Kammern 32, 33 zumindest eines doppeltwirkenden Aktuators 30 in Form eines Gleichlauf-Hydraulikzylinders 30 über je eine Verbindungsleitung 41, 42 führt.

Je nach bestimmter Ansteuerung der Hydraulikpumpe 20, zum Beispiel durch Einschlagrichtung und/oder Einschlagwinkel der Lenkung, wird eine bestimmte Menge der Hydraulikflüssigkeit von dem als Druckanschluss wirkenden einen Anschluss 21 der beiden Anschlüsse der Hydraulikpumpe und über die eine Verbindungsleitung 41 an die angeschlossene eine Kammer 32 unter Verschiebung des Kolbens 34 des Hydraulikzylinders 30 geleitet und dabei Hydraulikflüssigkeit aus der anderen Kammer 33 verdrängt.

Bei zu der einen entgegengesetzter Ansteuerung anderen Ansteuerung, zum Beispiel durch Änderung der Einschlagrichtung und/oder durch Änderung des Einschlagwinkels der Lenkung, wird die Hydraulikflüssigkeit von dem nun als Druckanschluss wirkenden anderen Anschluss 22 der Hydraulikpumpe 20 und hierbei über die andere Verbindungsleitung 42 an die angeschlossene andere Kammer 33 unter entgegengesetzter Verschiebung des Kolbens 34 des Hydraulikzylinders 30 geleitet und dabei Hydraulikflüssigkeit aus der einen Kammer 32 verdrängt.

Es ist weiter eine zum Tank 10 führende Rücklaufleitung 50 mit einem elektrisch gesteuerten Magnetventil 60 vorgesehen, das in seiner stromführenden Betriebsstellung die Rücklaufleitung 50 zum Tank 10 hin durch ein Rückschlagventil 61 sperrt. Unbestromt wird aufgrund der Kraft einer Feder 62 das Magnetventil 60 in seine Grundstellung mit einem Durchgang 63 geschaltet, in der die Rücklaufleitung 50 zum Tank 10 geöffnet ist.

Die Rücklaufleitung 50 ist von einem Verbindungspunkt 500 über eine Zweigleitung 51 mit der einen Verbindungsleitung 41 und über eine andere Zweigleitung 52 mit der anderen Verbindungsleitung 42 und weist die eine Zweigleitung 51 ein aufgrund der Kraft einer Feder 511 zu der einen Kammer 32 hin schließendes Rückschlagventil 510 und die andere Zweigleitung 52 ein aufgrund der Kraft einer anderen Feder 521 zu der anderen Kammer 33 hin schließendes anderes Rückschlagventil 520 auf.

Die erfindungsgemäße Ausführungsform der Stellschaltung zeichnet sich dadurch aus, dass der Hydraulikzylinder 31 als Gleichlaufzylinder ausgebildet ist. Ferner weist jede Verbindungsleitung 41, 42 ein zu der einen bzw. anderen Kammer 32 bzw. 33 hin öffnendes weiteres eines oder weiteres anderes Rückschlagventil 410, 420 auf. Das weitere eine Rückschlagventil 410 und das weitere andere Rückschlagventil 420 ist zwischen dem Anschlusspunkt 512, 522 jeder Zweigleitung 51, 52 mit der Verbindungsleitung 41, 42 und dem einen bzw. anderen Anschluss 21 bzw. 22 der Hydraulikpumpe 20 angeordnet.

Damit auch auf der Saugseite genügend Hydraulikflüssigkeit zur Verfügung steht, ist die eine Verbindungsleitung 41 und die andere Verbindungsleitung 42 über eine *Tankleitung* 411 bzw. eine andere Tankleitung 421 mit dem Tank über ein zu diesem hin sperrendes weiteres drittes 412 bzw. anderes weiteres drittes Rückschlagventil 422 verbunden, über die die Hydraulikflüssigkeit angesaugt werden kann.

Ferner ist zwischen jedem Anschlusspunkt 512, 522 und dem Tank 10 eine Überdruckleitung 513 und eine andere Überdruckleitung 523 vorgesehen, die mit einem druckgesteuerten, zum Tank 10 öffnenden Ventil 514 bzw. mit einem anderen druckgesteuerten, zum Tank 10 öffnenden Ventil 524 versehen ist. Baut sich in der jeweiligen Leitung ein Überdruck auf, so öffnet das jeweilige druckgesteuerte Ventil 514, 524 und der Überschuss kann über die eine bzw. andere Überdruckleitung 513 bzw. 523 in den Tank 10 ablaufen.

Das eine druckgesteuerte Ventil 514 öffnet auch dann, wenn die Summenkraft aus den in der einen Überdruckleitung 513 und der anderen Verbindungsleitung 42 herrschenden Drücke die Vorspannkraft der Feder des Ventils übersteigt, wobei eine der Druckübertragung dienende Pilotleitung 44 an die andere Verbindungsleitung 42 angeschlossen ist.

Ähnlich öffnet das andere druckgesteuerte Ventil 524 auch dann, wenn die Summenkraft aus den in der anderen Überdruckleitung 523 und der einen Verbindungsleitung 41 herrschenden Drücken die Vorspannkraft der Feder des Ventils übersteigt, wobei eine der Druckübertragung dienende andere Pilotleitung 43 an die eine Verbindungsleitung 41 angeschlossen ist.

Somit dienen die beiden druckgesteuerten Ventile 514 und 524 der Vorspannung der gesamten Schaltung. Somit wird der Abfluss zum Tank 10 erst beim Vorliegen der Drücke in den beiden Kammern 32, 33 des Hydraulikzylinders 30 freigeschaltet.

Wie der exemplarischen Darstellung gemäß Fig. 1 des Weiteren entnehmbar, ist dem Hydraulikzylinder 30 eine, insbesondere als Positionssensor ausgebildete, Lageerfassungseinrichtung 36 zum Erfassen der relativen Lage oder relativen Position zwischen dem Gehäuse 35 des Hydraulikzylinders 30 und dem kolbenförmigen Stellelement 34 des Hydraulikzylinders 30 zugeordnet.

Auch *sind* Erfassungsmittel 37, 38, 39 zum Erfassen von Betriebsparametern des Antriebsmotors 90 *vorgesehen,* nämlich
- eine Drehrichtungserfassungseinrichtung 37 zum Erfassen der Drehrichtung des Antriebsmotors 90,
- eine Drehzahlerfassungseinrichtung 38 zum Erfassen der Drehzahl des Antriebsmotors 90 und
- eine Drehmomenterfassungseinrichtung 39 zum Erfassen des Drehmoments des Antriebsmotors 90.

An eine, insbesondere als E[lectronic]C[ontrol]U[nit] oder als elektronische Regeleinheit ausgebildete, Regeleinrichtung 80 wird über die Lageerfassungseinrichtung 36 die relative Lage des Stellelements 34 zum Gehäuse 35 gemeldet. Entsprechend werden über die Erfassungsmittel 37, 38, 39 die Betriebsparameter des Antriebsmotors 90 an die Regeleinrichtung 80 gemeldet. Dies versetzt die Regeleinrichtung 80 in die Lage, die Betriebsvorgaben für den Antriebsmotor 90 an eine, insbesondere als E[ngine]C[ontrol]U[nit] oder als Motorsteuereinheit ausgebildete, Ansteuerungseinrichtung 91 dieses Antriebsmotors 90 zu übermitteln.

Um die erfassten Größen in digitalisierter Form übertragen zu können, sind die Lageerfassungseinrichtung 36, die Drehrichtungserfassungseinrichtung 37, die Drehzahlerfassungseinrichtung 38 und die Regeleinrichtung 80 über C[ontroller]A[rea]N[etwork] miteinander verbunden, wobei über dieses CAN und/oder über mindestens ein alternatives Netzwerk weitere Signale übermittelt werden können.

Wie der exemplarischen Darstellung gemäß Fig. 1 des Weiteren entnehmbar, ist der Regeleinrichtung 80 ein Sollwertgeber 81 zugeordnet ist, mittels dessen an die Regeleinrichtung 80 die gewünschte relative Lage des Stellelements 34 zum Gehäuse 35 *angefordert* wird, zum Beispiel bezüglich des Einschlagwinkels der Lenkung (steering wheel angle input).

Hierbei können die Lageerfassungseinrichtung 36, die Erfassungsmittel 37, 38, 39, die Regeleinrichtung 80, der Sollwertgeber 81 und die Ansteuerungseinrichtung 91 in einen Regelkreis eingebunden werden, bei dem die Differenz zwischen dem vom Sollwertgeber 81 geforderten Sollwert der relativen Lage des Stellelements 34 zum Gehäuse 35 und der von der Lageerfassungseinrichtung 36 gemeldeten relativen Lage des Stellelements 34 zum Gehäuse 35 durch entsprechende Ansteuerung 91 des Antriebsmotors 90 selbstständig ausgeregelt wird.

Durch Vergleichen der Veränderung der von der Lageerfassungseinrichtung 36 erfassten relativen Lage des Stellelements 34 zum Gehäuse 35 und des integrierten Signals der Drehzahlerfassungseinrichtung 38 sowie der Drehmomenterfassungseinrichtung 39 kann die Plausibilität der ermittelten Signale überprüft und/oder können Funktionsfehlzustände ermittelt werden.

Die Drehrichtungserfassungseinrichtung 37 und die Drehzahlerfassungseinrichtung 38 können, müssen aber nicht zu einer konstruktiven Einheit zusammengefasst werden.

Mittels der Drehmomenterfassungseinrichtung 39 der Batteriestrom gemessen.

Mittels der Drehmomenterfassungseinrichtung 39 wird der für den Antriebsmotor 90 bestimmte Versorgungsstrom, insbesondere Akkumulatorstrom oder Batteriestrom, gemessen. Hierzu ist die Drehmomenterfassungseinrichtung 39 zwischen den Antriebsmotor 90 und die Versorgung 40, insbesondere den Akkumulator oder die Batterie, geschaltet.

Der hydraulische Aktuator 30 kann, muss aber nicht
- mit einem in der einen Verbindungsleitung 41 vorgesehenen Rückschlagventil 410,
- mit einem in der anderen Verbindungsleitung 42 vorgesehenen Rückschlagventil 420,
- mit der einen Feder 511,
- mit der anderen Feder 521,
- mit dem Magnetventil 60,
- mit dem in der weiteren Verbindungsleitung 513 vorgesehenen, zum Tank 10 öffnenden Ventil 514 und/oder
- mit dem in der anderen weiteren Verbindungsleitung 523 vorgesehenen anderen, zum Tank 10 öffnenden Ventil 524
*mit mindestens einem der vorgenannten Elemente* zu einer konstruktiven Einheit zusammengefasst werden.

Die Stellschaltung gemäß Fig. 1 eignet sich erfindungsgemäß als Hilfslenkung für Nutzfahrzeuge.

### Bezugszeichenliste

- 100: hydrostatische Stellschaltung
- 10: Tank
- 20: Hydraulikpumpe, insbesondere reversierbare Hydraulikpumpe
- 21: erster Anschluss der Hydraulikpumpe 20
- 22: anderer oder zweiter Anschluss, insbesondere anderer oder zweiter Druckanschluss, der Hydraulikpumpe 20
- 30: hydraulischer Aktuator, insbesondere Hydraulikzylinder, zum Beispiel Lenkzylinder *in der Ausführung als Gleichlaufzylinder*
- 32: erste Kammer des hydraulischen Aktuators 30
- 33: andere oder zweite Kammer des hydraulischen Aktuators 30
- 34: Stellelement, insbesondere Trennorgan, zum Beispiel Kolben, des hydraulischen Aktuators 30
- 35: Gehäuse des hydraulischen Aktuators 30
- 36: Lageerfassungseinrichtung, insbesondere Positionssensor
- 37: Drehrichtungserfassungseinrichtung
- 38: Drehzahlerfassungseinrichtung
- 39: Drehmomenterfassungseinrichtung
- 40: Versorgung des Antriebsmotors 90, insbesondere Akkumulator oder Batterie
- 41: erste Verbindungsleitung
- 42: andere oder zweite Verbindungsleitung
- 43: Pilotleitung
- 44: andere oder zweite Pilotleitung
- 50: Rücklaufleitung
- 51: erste Zweigleitung
- 52: andere oder zweite Zweigleitung
- 60: elektrisch gesteuertes Magnetventil
- 61: Rückschlagventil des Magnetventils 60
- 62: Feder des Magnetventils 60
- 63: Durchgang des Magnetventils 60
- 80: Regeleinrichtung, insbesondere E[lectronic]C[ontrol]U[nit] oder elektronische Regeleinheit
- 81: Sollwertgeber, insbesondere bezüglich Einschlagwinkel der Lenkung (steering wheel angle input)
- 90: Antriebsmotor, insbesondere Elektromotor
- 91: Ansteuerungseinrichtung des Antriebsmotors 90, insbesondere E[ngine]C[ontrol]U[nit] oder Motorsteuereinheit
- 410: erstes Rückschlagventil
- *411*: *erste Tankleitung*
- *412*: *weiteres drittes Rückschlagventil*
- 420: anderes oder zweites Rückschlagventil
- *421*: *andere oder zweite Tankleitung*
- *422*: *anderes weiteres drittes Rückschlagventil*
- 500: Verbindungspunkt
- 510: weiteres Rückschlagventil
- 511: erste Feder
- *512*: *erster Anschlusspunkt*
- 513: weitere Verbindungsleitung
- 514: erstes Ventil
- 520: anderes weiteres oder zweites weiteres Rückschlagventil
- 521: andere oder zweite Feder
- *522*: *anderer oder zweiter Anschlusspunkt*
- 523: andere weitere oder zweite weitere Verbindungsleitung
- 524: anderes oder zweites Ventil

## Patentansprüche

1. Hydrostatische Stellschaltung (100), als Hilfslenkung in Nutzfahrzeugen, aufweisend
- mindestens einen Tank (10) mit Hydraulikflüssigkeit;
- mindestens einen doppeltwirkenden hydraulischen Aktuator (30)
-- mit zwei Kammern (32, 33),
-- mit einem mit einer Lenkachse verbundenen Gehäuse (35) und
-- mit einem bezüglich des Gehäuses (35) beweglichen, mit einem Lenkhebel der Lenkachse verbundenen Stellelement (34);
- mindestens eine gesteuerte, mittels mindestens eines Antriebsmotors (90) antreibbare und reversierbare Hydraulikpumpe (20) mit zwei Anschlüssen (21, 22), die über jeweils eine Verbindungsleitung (41, 42) mit einer der beiden Kammern (32, 33) verbunden sind,
-- wobei bei und/oder nach einem Ansteuern der Hydraulikpumpe (20), durch Einschlagrichtung und/oder durch Einschlagwinkel der Lenkung, eine bestimmte Menge der Hydraulikflüssigkeit vom als Druckanschluss wirkenden einen (21) der beiden Anschlüsse (21, 22) über die eine Verbindungsleitung (41) an die eine Kammer (32) unter Verschiebung des Stellelements (34) geleitet und hierbei Hydraulikflüssigkeit über eine an die andere Verbindungsleitung (42) angeschlossene andere weitere Verbindungsleitung (523) zum Tank (10) hin verdrängt wird,
-- wobei bei und/oder nach einem zum einen Ansteuern reversierten anderen Ansteuern der Hydraulikpumpe (20), durch Ändern der Einschlagrichtung und/oder durch Ändern des Einschlagwinkels der Lenkung, eine bestimmte Menge der Hydraulikflüssigkeit vom nun als Druckanschluss wirkenden anderen (22) der beiden Anschlüsse (21, 22) über die andere Verbindungsleitung (42) an die andere Kammer (33) unter entgegengesetzter Verschiebung des Stellelements (34) geleitet und hierbei Hydraulikflüssigkeit über eine an die eine Verbindungsleitung (41) angeschlossene weitere Verbindungsleitung (513) zum Tank (10) hin verdrängt wird,
-- wobei eine zum Tank (10) führende Rücklaufleitung (50) mit einem elektrisch gesteuerten Magnetventil (60) versehen ist, das
--- in seiner stromführenden Betriebsstellung die Rücklaufleitung (50) zum Tank (10) hin sperrt und
--- in seine stromlose Betriebsstellung aufgrund der Kraft mindestens einer Feder (62) geschaltet wird, in der die Rücklaufleitung (50) geöffnet ist,
-- wobei die Rücklaufleitung (50) über eine Zweigleitung (51) mit der einen Verbindungsleitung (41) und über eine andere Zweigleitung (52) mit der anderen Verbindungsleitung (42) verbunden ist und
-- wobei die eine Zweigleitung (51) ein aufgrund der Kraft einer Feder (511) zu der einen Kammer (32) hin schließendes und die andere Zweigleitung (52) ein aufgrund der Kraft einer anderen Feder (521) zu der anderen Kammer (33) hin schließendes Rückschlagventil (510 bzw. 520) aufweist;
- eine, insbesondere als Positionssensor ausgebildete, Lageerfassungseinrichtung (36) zum Erfassen der relativen Lage des Stellelements (34) zum Gehäuse (35); und
- mindestens ein Erfassungsmittel (37, 38, 39) zum Erfassen von Betriebsparametern des Antriebsmotors (90),
***gekennzeichnet durch***
*eine, insbesondere als E[lectronic]C[ontrol]U[nit] oder als elektronische Regeleinheit ausgebildete, Regeleinrichtung (80),*
- *an die*
-- *über die Lageerfassungseinrichtung* (36) *die relative Lage des Stellelements (34) zum* Gehäuse (35) *und*
-- *über die Erfassungsmittel (37,* 38, 39) *die Betriebsparameter des Antriebsmotors (90) gemeldet werden und*
- *von der die Betriebsvorgaben für den Antriebsmotor (90) an eine, insbesondere als E[ngine]C[ontrol]U[nit] oder als Motorsteuereinheit ausgebildete, Ansteuerungseinrichtung (91) des Antriebsmotors (90) übermittelt werden.*

2. Stellschaltung gemäß Anspruch 1, **gekennzeichnet**
- **durch** ein in der weiteren Verbindungsleitung (513) vorgesehenes, zum Tank (10) hin öffnendes Ventil (514) und
- **durch** ein in der anderen weiteren Verbindungsleitung (523) vorgesehenes, zum Tank (10) hin öffnendes anderes Ventil (524).

3. Stellschaltung gemäß Anspruch 1 oder 2, ***dadurch* gekennzeichnet, *dass*** *das Erfassungsmittel (37,* 38, 39) *als*
- *eine Drehrichtungserfassungseinrichtung (37) zum Erfassen der Drehrichtung des Antriebsmotors (90),*
- *eine Drehzahlerfassungseinrichtung* (38) *zum Erfassen der Drehzahl des Antriebsmotors (90) und*
- *eine Drehmomenterfassungseinrichtung* (39) *zum Erfassen des Drehmoments des Antriebsmotors (90)*
*ausgebildet ist.*

4. Stellschaltung gemäß Anspruch 3, **dadurch gekennzeichnet, dass** die Lageerfassungseinrichtung (36), die Drehrichtungserfassungseinrichtung (37), die Drehzahlerfassungseinrichtung (38) und die Regeleinrichtung (80) über C[ontroller]A[rea]N[etwork] miteinander verbunden sind, insbesondere dass die erfassten Daten in digitalisierter Form übermittelbar sind.

5. Stellschaltung gemäß Anspruch 4, **dadurch gekennzeichnet, dass** die Lageerfassungseinrichtung (36), die Drehrichtungserfassungseinrichtung (37), die Drehzahlerfassungseinrichtung (38) und die Regeleinrichtung (80) neben C[ontroller]A[rea]N[etwork] auch anderweitig verbindbar sind und/oder dass über diese Verbindungen weitere Signale übermittelbar sind.

6. Stellschaltung gemäß mindestens einem der Ansprüche *1* bis 5, **dadurch gekennzeichnet, dass** der Regeleinrichtung (80) ein Sollwertgeber (81) zugeordnet ist, mittels dessen an die Regeleinrichtung (80) die gewünschte relative Lage des Stellelements (34) zum Gehäuse (35) *angefordert* wird.

7. Stellschaltung gemäß Anspruch 6, **dadurch gekennzeichnet, dass** der Sollwertgeber (81) bezüglich des Einschlagwinkels der Lenkung (steering wheel angle input) ausgelegt ist.

8. Stellschaltung gemäß Anspruch 6 oder 7, **dadurch gekennzeichnet, dass** die Lageerfassungseinrichtung (36), die Erfassungsmittel (37, 38, 39), die Regeleinrichtung (80), der Sollwertgeber (81) und die Ansteuerungseinrichtung (91) in einen Regelkreis eingebunden sind, bei dem die Differenz zwischen dem vom Sollwertgeber (81) geforderten Sollwert der relativen Lage des Stellelements (34) zum Gehäuse (35) und der von der Lageerfassungseinrichtung (36) gemeldeten relativen Lage des Stellelements (34) zum Gehäuse (35) durch entsprechende Ansteuerung (91) des Antriebsmotors (90) selbstständig ausgeregelt wird.

9. Stellschaltung gemäß mindestens einem der Ansprüche 1 bis 8, **dadurch gekennzeichnet, dass** durch Vergleichen der Veränderung der von der Lageerfassungseinrichtung (36) erfassten relativen Lage des Stellelements (34) zum Gehäuse (35) und des integrierten Signals der Drehzahlerfassungseinrichtung (38) sowie der Drehmomenterfassungseinrichtung (39) die Plausibilität der ermittelten Signale überprüft und/oder Funktionsfehlzustände ermittelt werden.

10. Stellschaltung gemäß mindestens einem der Ansprüche 1 bis 9, **dadurch gekennzeichnet, dass** die Drehrichtungserfassungseinrichtung (37) und die Drehzahlerfassungseinrichtung (38) zu einer konstruktiven Einheit zusammengefasst sind.

11. Stellschaltung gemäß mindestens einem der Ansprüche 1 bis 10, **dadurch gekennzeichnet, dass** mittels der Drehmomenterfassungseinrichtung (39) der für den Antriebsmotor (90) bestimmte Versorgungsstrom, insbesondere Akkumulatorstrom oder Batteriestrom, gemessen wird.

12. Stellschaltung gemäß Anspruch 11, **dadurch gekennzeichnet, dass** die Drehmomenterfassungseinrichtung (39) zwischen den Antriebsmotor (90) und die Versorgung (40), insbesondere den Akkumulator oder die Batterie, geschaltet ist.

13. Stellschaltung gemäß mindestens einem der Ansprüche 1 bis 12, **dadurch gekennzeichnet, dass** der hydraulische Aktuator (30) als Hydraulikzylinder, insbesondere als Gleichlaufzylinder, ausgebildet ist.

14. Stellschaltung gemäß mindestens einem der Ansprüche 1 bis 13, **dadurch gekennzeichnet, dass** der hydraulische Aktuator (30)
- mit einem in der einen Verbindungsleitung (41) vorgesehenen Rückschlagventil (410),
- mit einem in der anderen Verbindungsleitung (42) vorgesehenen Rückschlagventil (420),
- mit der einen Feder (511),
- mit der anderen Feder (521),
- mit dem Magnetventil (60),
- mit dem in der weiteren Verbindungsleitung (513) vorgesehenen Ventil (514) und/oder
- mit dem in der anderen weiteren Verbindungsleitung (523) vorgesehenen anderen Ventil (524) zu einer konstruktiven Einheit zusammengefasst sind.

15. Verwendung mindestens einer Stellschaltung gemäß mindestens einem der Ansprüche 1 bis 14 als Hilfslenkung für Nutzfahrzeuge.

## Claims

1. A hydrostatic actuation circuit (100) as a power-assisted steering system in commercial vehicles, having
- at least one tank (10) with hydraulic liquid;
- at least one double-action hydraulic actuator (30)
-- with two chambers (32, 33),
-- with a housing (35) connected to a steering axle, and
-- with an actuation element (34), which is movable in relation to the housing (35) and is connected to a steering lever of the steering axle;
- at least one controlled hydraulic pump (20), which can be driven and reversed by means of at least one drive motor (90) and has two connections (21, 22), which are each connected via a connecting line (41, 42) to one of the two chambers (32, 33),
-- wherein during and/or after an activation of the hydraulic pump (20) as a result of the steering wheel direction input and/or steering wheel angle input, a defined amount of hydraulic liquid is conducted from one (21) of the two connections (21, 22) that acts as a pressure connection, via one connecting line (41) to one chamber (32), displacing the actuation element (34), and in the process hydraulic liquid is forced towards the tank (10) via another, further connecting line (523) that is connected to the other connecting line (42),
-- wherein during and/or after another activation of the hydraulic pump (20) in the opposite direction to the first activation as a result of a change in the steering wheel direction input and/or steering wheel angle input, a defined amount of hydraulic liquid is conducted from the other (22) of the two connections (21, 22) that now acts as a pressure connection, via the other connecting line (42) to the other chamber (33), displacing the actuation element (34) in the opposite direction, and in the process hydraulic liquid is forced towards the tank (10) via a further connecting line (513) that is connected to the first connecting line (41),
-- wherein a return line (50) that leads to the tank (10) is provided with an electrically controlled solenoid valve (60), which
--- closes the return line (50) to the tank (10) when in its current-carrying operating position and
--- is switched by the force of at least one spring (62) into its currentless operating position, in which the return line (50) is open,
-- wherein the return line (50) is connected via a branch line (51) to one connecting line (41) and via another branch line (52) to the other connecting line (42), and
-- wherein one branch line (51) has a check valve (510) that closes off one chamber (32) by the force of a spring (511) and the other branch line (52) has a check valve (520) that closes off the other chamber (33) by the force of another spring (521);
- a position detection device (36), in particular in the form of a position sensor, for detecting the relative position of the actuation element (34) in relation to the housing (35); and
- at least one detection means (37, 38, 39) for detecting operating parameters of the drive motor (90),
**characterised by**
a control device (80), in particular in the form of an ECU or electronic control unit,
- to which are reported
-- the relative position of the actuation element (34) in relation to the housing (35) by means of the position detection device (36) and
-- the operating parameters of the drive motor (90) by means of the detection means (37, 38, 39), and
- from which the operating specifications for the drive motor (90) are transmitted to an activation device (91), in particular in the form of an ECU or engine control unit, of the drive motor (90).

2. The actuation circuit according to Claim 1, **characterised by**
- a valve (514) that is provided in the further connecting line (513) and opens towards the tank (10), and
- another valve (524) that is provided in the other, further connecting line (523) and opens towards the tank (10).

3. The actuation circuit according to Claim 1 or 2, **characterised in that** the detection means (37, 38, 39) is in the form of
- a rotation direction detection device (37) for detecting the rotation direction of the drive motor (90),
- a rotation speed detection device (38) for detecting the rotation speed of the drive motor (90), and
- a torque detection device (39) for detecting the torque of the drive motor (90).

4. The actuation circuit according to Claim 3, **characterised in that** the position detection device (36), the rotation direction detection device (37), the rotation speed detection device (38) and the control device (80) are connected to each other by means of a CAN (controller area network), in particular that the detected data can be transmitted in a digitalised form.

5. The actuation circuit according to Claim 4, **characterised in that** the position detection device (36), the rotation direction detection device (37), the rotation speed detection device (38) and the control device (80) can be connected in another manner in addition to the CAN (controller area network) and/or that further signals can be transmitted via said connections.

6. The actuation circuit according to at least one of Claims 1 to 5, **characterised in that** the control device (80) is assigned a setpoint generator (81), by means of which the desired relative position of the actuation element (34) in relation to the housing (35) is requested from the control device (80).

7. The actuation circuit according to Claim 6, **characterised in that** the setpoint generator (81) is designed in relation to the steering wheel angle input.

8. The actuation circuit according to Claim 6 or 7, **characterised in that** the position detection device (36), the detection means (37, 38, 39), the control device (80), the setpoint generator (81) and the activation device (91) are integrated in a control circuit in which the difference between the setpoint of the relative position of the actuation element (34) in relation to the housing (35) that is requested by the setpoint generator (81) and the relative position of the actuation element (34) in relation to the housing (35) that is reported by the position detection device (36) is automatically compensated by corresponding activation (91) of the drive motor (90).

9. The actuation circuit according to at least one of Claims 1 to 8, **characterised in that** the plausibility of the determined signals is checked and/or malfunction states are determined by comparing the change in the relative position of the actuation element (34) in relation to the housing (35) that is detected by the position detection device (36) with the integrated signal of the rotation speed detection device (38) and of the torque detection device (39).

10. The actuation circuit according to at least one of Claims 1 to 9, **characterised in that** the rotation direction detection device (37) and the rotation speed detection device (38) are combined to form a constructive unit.

11. The actuation circuit according to at least one of Claims 1 to 10, **characterised in that** the supply current, in particular accumulator current or battery current, assigned to the drive motor (90) is measured by means of the torque detection device (39).

12. The actuation circuit according to Claim 11, **characterised in that** the torque detection device (39) is connected between the drive motor (90) and the supply (40), in particular the accumulator or battery.

13. The actuation circuit according to at least one of Claims 1 to 12, **characterised in that** the hydraulic actuator (30) is in the form of a hydraulic cylinder, in particular a synchronous cylinder.

14. The actuation circuit according to at least one of Claims 1 to 13, **characterised in that** the hydraulic actuator (30) is combined with
- a check valve (410) provided in one connecting line (41),
- a check valve (420) provided in the other connecting line (42),
- one spring (511),
- the other spring (521),
- the solenoid valve (60),
- the valve (514) provided in the further connecting line (513) and/or
- the other valve (524) provided in the other further connecting line (523) to form a constructive unit.

15. The use of at least one actuation circuit according to at least one of Claims 1 to 14 as a power-assisted steering system for commercial vehicles.

## Revendications

1. Circuit de réglage hydrostatique (100) en tant que direction assistée dans des véhicules utilitaires comprenant
- au moins un réservoir (10) avec du liquide hydraulique,
- au moins un actionneur hydraulique à double effet (30),
-- avec deux chambres (32, 33),
-- avec un carter (35) relié à un axe de direction et
-- avec un élément de réglage (34) relié à un levier de direction de l'axe de direction, mobile par rapport au carter (35),
- au moins une pompe hydraulique (20) pilotée, pouvant être entraînée et inversée au moyen d'au moins un moteur d'entraînement (90), avec deux raccords (21, 22) qui sont reliés respectivement par un conduit de liaison (41, 42) à une des deux chambres (32, 33),
-- pour lequel, lors et/ou après une activation de la pompe hydraulique (20), une certaine quantité du liquide hydraulique est guidée par une direction de braquage et/ou par un angle de braquage de la direction à travers un (21) des deux raccords (21, 22) agissant comme raccord de pression à travers le conduit de liaison (41) sur la chambre (32) en déplaçant l'élément de réglage (34) et le liquide hydraulique est à cet effet chassé vers le réservoir (10) à travers un autre conduit de liaison (523) ultérieur raccordé à l'autre conduit de liaison (42),
-- pour lequel lors et/ou après une autre activation inversée par rapport à une activation de la pompe hydraulique (20), une certaine quantité de liquide hydraulique est guidée, par modification de la direction de braquage et/ou par modification de l'angle de braquage de la direction, par l'autre (22) des deux raccords (21, 22) agissant alors comme raccord de pression, à travers l'autre conduit de liaison (42) sur l'autre chambre (33) sous l'effet d'un déplacement opposé de l'élément de réglage (34) et à cet effet le liquide hydraulique est chassé vers le réservoir (10) à travers un autre conduit de liaison (513) raccordé au conduit de liaison (41),
-- pour lequel une conduite de retour (50) menant au réservoir (10) est dotée d'une électrovanne (60) à pilotage électrique, qui
--- bloque le conduit de retour (50) vers le réservoir (10) dans sa position de fonctionnement guidant l'écoulement et
--- est connectée dans sa position de fonctionnement hors circuit en raison de la force d'au moins un ressort (62), dans laquelle la conduite de retour (50) est ouvert,
-- pour lequel la conduite de retour (50) est reliée par une conduite dérivée (51) au conduit de liaison (41) et par une autre conduite dérivée (52) à l'autre conduit de liaison (42) et
-- pour lequel la conduite dérivée (51) comporte un clapet antiretour (510 ou 520) fermant une chambre (32) en raison de la force d'un ressort (511) et l'autre conduite dérivée (52) comporte un clapet antiretour (510 ou 520) fermant l'autre chambre (33) en raison de la force d'un autre ressort (521),
- un système de saisie de position (36) constitué en particulier comme un capteur de position, pour saisir la position relative de l'élément de réglage (34) par rapport au carter (35), et
- au moins un moyen de saisie (37, 38, 39) pour saisir des paramètres de fonctionnement du moteur d'entraînement (90),
**caractérisé par**
un système de réglage (80), constitué en particulier comme U[nité] de C[ommande] E[lectronique] (UCE) ou unité de réglage électronique, unité de réglage électronique
- sur laquelle
-- sont indiqués, par le système de saisie de position (36), la position relative de l'élément de réglage (34) par rapport au carter (35) et
-- par les systèmes de saisie (37, 38, 39), les paramètres de fonctionnement du moteur d'entraînement (90), et
- par lesquels sont transmises les consignes de fonctionnement pour le moteur d'entraînement (90) à un système de pilotage (91) du moteur d'entraînement (90), constitué en particuier comme U[nité] de C[ommande] de M[oteur] (UCM) ou comme unité de commande de moteur

2. Circuit de réglage selon la revendication 1 **caractérisé**
- **par** une soupape (514) s'ouvrant vers le réservoir (10), prévue dans l'autre conduit de liaison (513), et
- par une autre soupape (524) s'ouvrant au réservoir (10), prévue dans l'autre conduit de liaison (523).

3. Circuit de réglage selon la revendication 1 ou 2 **caractérisé en ce que** le moyen de saisie (37, 38, 39) est constitué comme
- un système de saisie de sens de rotation (37) pour saisir le sens de rotation du moteur d'entraînement (90),
- un système de saisie du nombre de tours (38) pour saisir le régime du moteur d'entraînement (90) et
- un système de saisie de couple (39) pour saisir le couple du moteur d'entraînement (90).

4. Circuit de réglage selon la revendication 3 **caractérisé en ce que** le système de saisie de position (36), le système de saisie du sens de rotation (37), le système de saisie de nombre de tours (38) et le système de réglage (80) sont reliés entre eux par le R[éseau] à Z[one] C[ontrôlée] (RZC), en particulier **en ce que** les données saisies peuvent être transmises sous une forme numérisée.

5. Circuit de réglage selon la revendication 4 **caractérisé en ce que** le système de saisie de position (36), le système de saisie du sens de rotation (37), le système de saisie de nombre de tours (38) et le système de réglage (80) peuvent être également reliés autrement en plus du R[éseau] à Z[one] C[ontrôlée] (RZC) et/ou **en ce que** d'autres signaux peuvent être transmis par ces liaisons.

6. Circuit de réglage selon au moins l'une quelocnque des revendications 1 à 5 **caractérisé en ce qu'**un transmetteur de valeur théorique (81) est attribué au système de réglage (80), au moyen duquel la position relative souhaitée de l'élément de réglage (34) par rapport au carter (35) est demandée au système de réglage (80).

7. Circuit de réglage selon la revendication 6 **caractérisé en ce que** le transmetteur de valeur théorique (81) est conçu en référence à l'angle de braquage de la direction.

8. Circuit de réglage selon la revendication 6 ou 7 **caractérisé en ce que** le système de saisie de position (36), les systèmes de saisie (37, 38, 39), le système de réglage (80), le transmetteur de valeur théorique (81) et le système de commande (91) sont intégrés dans un circuit de réglage pour lequel la différence entre la valeur théorique de la position relative de l'élément de réglage (34) par rapport au carter (35) demandée par le transmetteur de valeur théorique (81) et de la position relative de l'élément de réglage (34) par rapport au carter (35) annoncée par le système de saisie de position (36) est régulée de manière autonome par pilotage correspondant (91) du moteur d'entraînement (90).

9. Circuit de réglage selon au moins l'une quelconque des revendications 1 à 8 **caractérisé en ce qu'**en comparant la modification de la position relative de l'élément de réglage (34) par rapport au carter (35), saisie par le système de saisie de position (36) et le signal intégré du système de saisie du nombre de tours (38) ainsi que du système de saisie de couple (39), la plausibilité des signaux déterminés est contrôlée et/ou les états de défaut de fonctionnement sont déterminés.

10. Circuit de réglage selon au moins l'une quelconque des revendications 1 à 9 **caractérisé en ce que** le système de saisie de sens de rotation (37) et le système de saisie du nombre de tours (38) sont réunis en une unité constructive.

11. Circuit de réglage selon au moins l'une quelconque des revendications 1 à 10 **caractérisé en ce que** le courant d'alimentation (90) destiné au moteur d'entraînement, en particulier le courant d'accumulateur ou courant de batterie, est mesuré aumoyen du système de saisie de couple (39).

12. Circuit de réglage selon la revendication 11 **caractérisé en ce que** le système de saisie de couple (39), est connecté entre le moteur d'entraînement (90) et l'alimentation (40), en particulier l'accumulateur ou la batterie.

13. Circuit de réglage selon les revendications 1 à 12 **caractérisé en ce que** l'actionneur hydraulique (30) est constitué comme vérin hydraulique, en particulier comme vérin de synchronisation.

14. Circuit de réglage selon au moins l'une quelconque des revendications 1 à 13 **caractérisé en ce que** l'actionneur hydraulique (30) est réuni avec
- un clapet antiretour (410) prévu dans le conduit de liaison (41),
- un clapet antiretour (420) prévu dans l'autre conduit de liaison (42),
- un ressort (511),
- l'autre ressort (521),
- l'électrovanne (60),
- la soupape (514) prévue dans l'autre conduit de liaison (513) et/ou
- l'autre soupape (524) prévue dans l'autre conduit de liaison (523) en une unité constructive.

15. Utilisation d'au moins un circuit de réglage selon au moins l'une quelconque des revendications 1 à 14 en tant que direction assistée pour véhicules utilitaires.
